(19) Europäisches Patentamt
European Patent Office
Office européen des brevets

(11) EP 1 530 335 A2

(12) # EUROPEAN PATENT APPLICATION

(43) Date of publication:
**11.05.2005 Bulletin 2005/19**

(51) Int Cl.[7]: **H04L 27/26**

(21) Application number: **04026385.7**

(22) Date of filing: **05.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **05.11.2003 KR 2003078134**

(71) Applicant: **Samsung Electronics Co., Ltd.**
**Suwon-si, Gyeonggi-do (KR)**

(72) Inventors:
- **Song, Kee-Bong, c/o Samsung Electronics Co. Ltd.**
  **Suwon-si Gyeonggi-do (KR)**
- **Hwang, Chan-Soo, c/o Samsung Electronics Co. Ltd.**
  **Suwon-si Gyeonggi-do (KR)**
- **Lee, Dong-Jun, c/o Samsung Electronics Co. Ltd.**
  **Suwon-si Gyeonggi-do (KR)**

(74) Representative: **Grünecker, Kinkeldey, Stockmair & Schwanhäusser Anwaltssozietät**
**Maximilianstrasse 58**
**80538 München (DE)**

(54) **Apparatus and method for cancelling interference signal in an orthogonal frequency division multiplexing system using multiple antenna**

(57) A receiving apparatus and method for receiving signals through a plurality of receive antennas in a mobile communication system. In the receiving apparatus, a plurality of FFTs transform frequency-domain symbol sequences received from the receive antennas to time-domain FFT symbol sequences, an SIC receiver decides the value of a higher-priority transmitted symbol sequence using its FFT symbol sequence and decides the value of a lower-priority transmitted symbol sequence using the decided higher-priority transmitted symbol sequence and its error, a plurality of demodulators demodulate the decided transmitted symbol sequences to a plurality of coded bit streams, a plurality of deinterleavers deinterleave the coded bit streams, stream by stream, and a parallel-to-serial converter converts the deinterleaved coded bit streams to one coded bit stream.

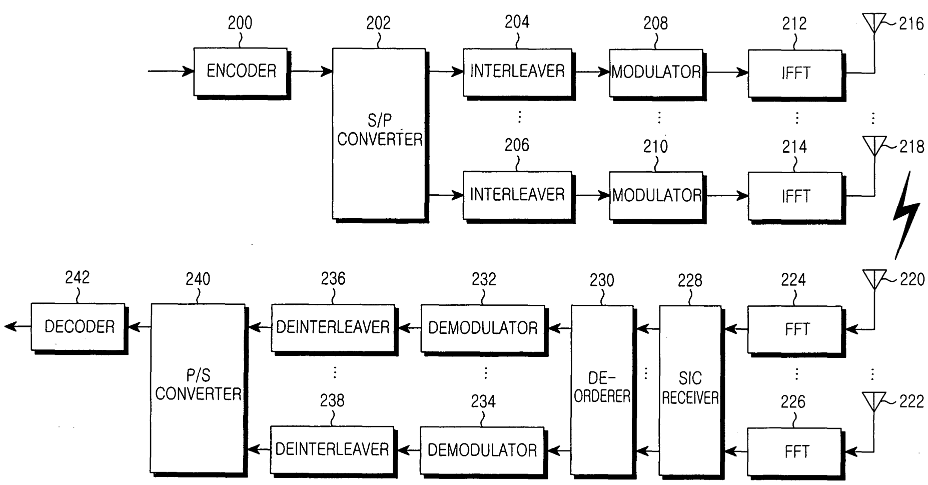


FIG.2



Printed by Jouve, 75001 PARIS (FR)

## Description

The present invention relates generally to a MIMO (Multi-Input Multi-Output) OFDM (Orthogonal Frequency Division Multiplexing) mobile communication system, and in particular, to an apparatus and method for improving the performance of an error correction code for correcting errors resulting from the effects of error propagation.

A signal transmitted on a radio signal experiences multipath interference due to a variety of obstacles between a transmitter and a receiver. The characteristics of the multipath radio channel are determined by a maximum delay spread and signal transmission period. If the transmission period is longer than the maximum delay spread, no interference occurs between successive signals and the radio channel is referred to in the frequency domain as a frequency non-selective fading channel. However, the transmission period is shorter than the maximum delay spread at wideband high-speed transmission. As a result, interference occurs between successive signals and a received signal is subject to intersymbol interference (ISI). The radio channel is referred to in the frequency domain as a frequency selective fading channel. In the case of single carrier transmission using coherent modulation, an equalizer is required to cancel the ISI. Also, as the data rate increases, ISI-incurred distortion increases and the complexity of the required equalizer in turn increases. To solve the equalization problem in the single carrier transmission scheme, the OFDM scheme was proposed.

In general, OFDM is defined as a two-dimensional access scheme of time division access and frequency division access in combination. An OFDM symbol is distributedly transmitted over subcarriers in a predetermined number of subchannels.

In OFDM, the spectrums of subchannels orthogonally overlap with each other, having a positive effect on spectral efficiency. Also, implementation of OFDM modulation/demodulation by IFFT (Inverse Fast Fourier Transform) and FFT (Fast Fourier Transform) allows efficient digital realization of a modulator/demodulator. OFDM is robust against frequency selective fading or narrow band interference, which renders OFDM effective as a transmission scheme for European digital broadcasting and for high-speed data transmission adopted as the standards of large-volume wireless communication systems such as the IEEE 802.11a, IEEE 802.16a and IEEE 802.16b standards.

OFDM is a special case of MCM (Multi-Carrier Modulation) in which an input serial symbol sequence is converted to parallel symbol sequences and modulated to multiple orthogonal sub-carriers, prior to transmission.

The first MCM systems appeared in the late 1950's for military high frequency (HF) radio communication, and OFDM with overlapping orthogonal sub-carriers was initially developed in the 1970's. In view of orthogonal modulation between multiple carriers, OFDM has limitations in actual implementation for systems. In 1971, Weinstein, et. al. proposed an OFDM scheme that applies DFT (Discrete Fourier Transform) to parallel data transmission as an efficient modulation/demodulation process, which was a driving force behind the development of OFDM. Also, the introduction of a guard interval and a cyclic prefix as the guard interval further mitigates adverse effects of multi-path propagation and delay spread on systems. For this reason, OFDM has widely been exploited for digital data communications such as digital audio broadcasting (DAB), digital TV broadcasting, wireless local area network (WLAN), and wireless asynchronous transfer mode (WATM) communications. Although hardware complexity was an obstacle to wide use of OFDM, recent advances in digital signal processing technology including FFT and IFFT enable OFDM to be implemented. OFDM, similar to FDM (Frequency Division Multiplexing), boasts optimum transmission efficiency in high-speed data transmission because it transmits data on sub-carriers, maintaining orthogonality among them. The optimum transmission efficiency is further attributed to good frequency use efficiency and robustness against multipath fading in OFDM. In particular, overlapping frequency spectrums lead to efficient frequency use and robustness against frequency selective fading and multipath fading. OFDM reduces the effects of ISI by use of guard intervals and enables designing of a simple equalizer hardware structure. Furthermore, since OFDM is robust against impulse noise, it is increasingly popular in communication systems.

FIG. 1 is a block diagram of a typical OFDM mobile communication system. Referring to FIG. 1, an encoder 100 encodes binary input bits and outputs coded bit streams. An interleaver 102 interleaves the serial coded bit streams and a modulator 104 maps the interleaved bit streams to symbols on a signal constellation. QPSK (Quadrature Phase Shift Keying), 8PSK (8-ary Phase Shift Keying), 16QAM (16-ary Quadrature Amplitude Modulation) or 64QAM (64-ary QAM) is adopted as a modulation scheme in the modulator 104. The number of bits in one symbol is determined in correspondence with the modulation scheme used. A QPSK modulation symbol includes 2 bits, an 8PSK modulation symbol 3 bits, a 16QAM modulation symbol 4 bits, and a 64QAM modulation symbol 6 bits. An IFFT 106 IFFT-processes the modulated symbols and transmits the IFFT signal through a transmit antenna 108.

A receive antenna 110 receives the symbols from the transmit antenna 108. An FFT 112 FFT-processes the received signal and a demodulator 114, having the same signal constellation as used in the modulator 104, converts despread symbols to binary symbols in a demodulation scheme. The demodulation scheme is determined in correspondence with the modulation scheme. A deinterleaver 116 deinterleaves the demodulated binary bit streams in a deinterleaving method corresponding to the interleaving method of the interleaver 102. A decoder 118 decodes the interleaved binary bit streams.

FIG. 2 is a block diagram of an OFDM mobile communication system using multiple transmit/receive antennas for data transmission/reception. Referring to FIG. 2, an encoder 200 encodes binary input bits and outputs a coded bit stream. A serial-to-parallel (S/P) converter 202 converts the serial coded bit stream into parallel coded bit streams, which will be described hereinbelow with reference to FIG. 4. The parallel bit streams are provided to interleavers 204 to 206. The interleavers 204 to 206, modulators 208 to 210, IFFTs 212 to 214, and transmit antennas 216 to 218 operate in the same manner as their respective counterparts 102, 104, 106 and 108 illustrated in FIG. 1, except that due to the use of multiple transmit antennas, the number of subcarriers assigned to each IFFT is less than that of subcarriers assigned to the IFFT 106 illustrated in FIG. 1.

Receive antennas 220 to 222 receive symbols from the transmit antennas 216 to 218. FFTs 224 to 226 FFT-process the received signal and output FFT signals to a successive interference cancellation (SIC) receiver 228. The operation of the SIC receiver 228 will be described hereinbelow, with reference to FIG. 3. The output of the SIC receiver 228 is applied to a de-orderer 230. Initially, the SIC receiver 228 detects a stream in a good reception state and detects another stream using the detected stream. Because the SIC receiver 228 determines which stream is in a better reception state, a detection order is different from the order of transmitted signals. Therefore, the de-orderer 230 de-orders the transmitted signals according to their reception states. Demodulators 232 to 234 and deinterleavers 236 to 238 process the de-ordered symbols in the same manner as the demodulator 114 and the deinterleaver 116 illustrated in FIG. 1. A parallel-to-serial (P/S) converter 240 converts the parallel deinterleaved bit streams to a serial binary bit stream, which will be described hereinbelow with reference to FIG. 4. A decoder 242 decodes the binary bit stream.

Signals transmitted from the different transmit antennas are received linearly overlapped at the receive antennas in the multiple antenna system. Hence, as the number of the transmit/receive antennas increases, decoding complexity increases. The SIC receiver repeatedly uses low-computation linear receivers to reduce the decoding complexity. The SIC receiver achieves gradually improved performance by canceling interference in a previous decoded signal. Yet, the SIC scheme has a distinctive shortcoming in that errors generated in the previous determined signal are increased in the current stage.

Referring to FIG. 3, the structure of the SIC receiver will be described. The SIC receiver of Fig. 3 receives signals through two receive antennas, by way of example. In FIG. 3, the signals received through the two receive antennas are $y_1$ and $y_2$,and are set forth in Equation (1) as follows:

$$y_1 = x_1h_{11} + x_2h_{12} + z_1$$

$$y_2 = x_1h_{21} + x_2h_{22} + z_2 \qquad (1)$$

As noted from Equation (1), two transmit antennas transmit signals. In Equation (1), $x_1$ and $x_2$ are signals transmitted from first and second transmit antennas, respectively, $h_{11}$ and $h_{12}$ are a channel coefficient between the first transmit antenna and a first receive antenna and a channel coefficient between the second transmit antenna and the first receive antenna, respectively, $h_{21}$ and $h_{22}$ are a channel coefficient between the first transmit antenna and a second receive antenna and a channel coefficient between the second transmit antenna and the second receive antenna, respectively, and $z_1$ and $z_2$ are noise on radio channels.

An MMSE (Minimum Mean Square Error) receiver 300 estimates $x_1$ and $x_2$ from $y_1$ and $y_2$. As described earlier, the SIC receiver estimates the signals transmitted from the transmit antennas in a plurality of stages. The SIC receiver first estimates a signal transmitted from one transmit antenna (the first transmit antenna) and then a signal transmitted from the other transmit antenna (the second transmit antenna) using the first estimated signal. In the case of three transmit antennas, the SIC receiver further estimates a signal transmitted from a third transmit antenna using the estimates of the transmitted signals from the first and second transmit antennas. The signals received at the MMSE receiver from the first and second receive antennas are set forth in Equation (2) below:

$$y_1 = x_1\ h_{11} + z_3$$

$$y_2 = x_1h_{21} + z_4 \qquad (2)$$

As noted from Equation (2), the MMSE receiver 300 estimates the signal transmitted from the second antenna as noise. By Equation (1) and Equation (2), Equation (3) is derived:

$$x_3 = x_2\ h_{12} + z_1$$

$$z_4 = x_2\ h_{22} + z_2 \qquad (3)$$

While the transmitted signal from the second transmit antenna is estimated as noise in Equation (2), the transmitted signal from the first transmit antenna can also be estimated as noise. In this case, Equation (4) is set forth:

$$y_1 = x_2\ h_{12} + z_5$$

$$y_2 = x_2\ h_{22} + z_6 \qquad (4)$$

The MMSE receiver 300 estimates the transmitted signal $x_1$ using Equation (2) according to Equation (5):

$$E = |Ay - x_1|^2 \qquad (5)$$

where y is the sum of $y_1$ and $y_2$. Using Equation (5), $x_1$ having a minimum E is achieved. Therefore, the estimate $\tilde{x}_1$ of $x_1$ is calculated according to Equation (6):

$$\tilde{x}_1 = Ay \qquad \ldots\ldots (6)$$

In the same manner, $x_2$ can be estimated. A stream orderer 302 prioritizes the estimates of $x_1$ and $x_2$ according to their MMSE values. That is, it determines a received signal having minimum errors on a radio channel based on the MMSE values. In the case illustrated in FIG. 3, $x_1$ has less errors than $x_2$.

The stream oderer 302 provides $\tilde{x}_1$ to the de-orderer 230 illustrated in FIG. 2 and a decider 304. The decider 304 decides the values of the estimated bits. Because the MMSE receiver 300 estimates the transmitted signals simply based on mathematical calculations, the estimates can be values that may not be available for transmission. Therefore, the decider 304 decides an available value for transmission in the transmitter using the received estimate. If no errors occur on the radio channel, the estimate is identical to the decided value. An inserter 306 provides the decided $\tilde{x}_1$ to calculators 308 and 310. The calculators 308 and 310 estimate the received signals $y_1$ and $y_2$ according to Equation (7):

$$\bar{y}_1 = \hat{x}_1 h_{11} + x_2 h_{12} + z_1$$

$$\bar{y}_2 = \hat{x}_1 h_{21} + x_2 h_{22} + z_2 \qquad (7)$$

An MMSE receiver 312 estimates the signal transmitted from the second transmit antenna using the estimated received signals according to Equation (8):

$$E = \left|B\bar{y} - x_2\right|^2 \qquad (8)$$

where $\tilde{y}$ is the sum of $\tilde{y}_1$ and $\tilde{y}_2$. By Equation (8), $x_2$ resulting in a minimum E is achieved. Thus, an estimate $\tilde{x}_2$ of $x_2$ is calculated according to Equation (9):

$$\overline{x_2} = B\bar{y} \qquad (9)$$

and provided to the de-orderer 230 illustrated in FIG. 2.

As described above, the SIC receiver estimates another transmitted signal in a current stage using a transmitted signal estimated in the previous stage. If the transmitted signals are interleaved in the same interleaver prior to transmission and errors are generated in a particular bit during transmission, the receiver determines that its adjacent bits as well as the particular bit have errors.

Since signals transmitted from previous transmit antennas are estimated and then a signal transmitted from a current transmit antenna is estimated using the estimated signals, the estimates of the previous transmitted signals are reflected in a received signal used to estimate the current transmitted signal. An estimate of the received signal by which to estimate the current transmitted signal is expressed as set forth in Equation (10):

$$\bar{y}_j = \bar{y}_{j\text{-}1} - h_{j\text{-}1}\ \bar{x}_{j\text{-}}1 \qquad \bar{y}_1 = y \tag{10}$$

where $\tilde{y}_j$ is an estimate of a received signal used to estimate a transmitted signal from a $j^{th}$ transmit antenna, $\tilde{y}_{j-1}$ is an estimate of a received signal used to estimate a transmitted signal from a Q-1)$^{th}$ transmit antenna, and $\tilde{x}_{j-i}$ is an estimate of the transmitted signal from the (j-1 )$^{th}$ transmit antenna. Equation (10) shows that the estimate of a received signal used for estimation of a transmitted signal from the previous transmit antenna is to be considered to estimate a transmitted signal from the current antenna. The following Equation (11) represents a scaling factor C; to remove the bias of the estimate of the transmitted signal from the $j^{th}$ transmit antenna:

$$c_j = [1 - \frac{1}{SNR}\ (H)(j)^{\bullet} H(j) + \frac{I_{N_7}}{SNR}\ )^{-1}]^{-1} \tag{11}$$

where $H(j)$ is a channel coefficient between the $j^{th}$ transmit antenna and the multiple transmit antennas and $I_{N_T}$ is an $N_T$x$N_T$ identity matrix, and SNR is the signal to noise ration. Using Equation (10) and Equation (11), a signal transmitted from a particular transmit antennas is estimated according to equation (12):

$$\bar{x}_j = c_j\ [(H(j)^{\bullet}\ H(j) + \frac{I_{N_7}}{SNR}\ ]^{-1}\ k_j^{\bullet}\bar{y}_j \tag{12}$$

As noted from Equation (12), a signal transmitted from the (j-1)$^{th}$ transmit antenna must be first estimated in order to estimate a signal transmitted from the $j^{th}$ transmit antenna.

Hereinbelow, a description is made of an operation for the demodulators 232 to 234 of FIG. 2 to decide the signals transmitted from the transmitter based on the estimated data. The demodulators 232 to 234 decide received signals based on the log-likelihood ratio (LLR) of a $k^{th}$ bit transmitted from the $j^{th}$ transmit antenna. The LLR of the $k^{th}$ bit transmitted from the $j^{th}$ transmit antenna is computed according to Equation (13):

$$v_j^k = \mathrm{CSI}_j \left[\min_{x\in\chi_0^k}|\tilde{x}_j - x|^2 - \min_{x\in\chi_1^k}|\tilde{x}_j - x|^2\right] = \mathrm{CSI}_j\ D(\tilde{x}_j\ ,k) \quad \ldots\ldots (13)$$

where $\tilde{x}_j$ is an equalized sample (estimate) for the $j^{th}$ transmit antenna output from the SIC receiver, $CSI_j$ is channel state information (CSI) of the $j^{th}$ transmit antenna, k is a bit index, and $x_0^k$ ($x_j^k$) is a set of transmitted signals having the $k^{th}$ bit mapped to 0 (1) each. Equation (13) represents soft information of the $k^{th}$ bit of the equalized $j^{th}$ transmitted signal. **And**,D represents an equalized received signal. The soft information indicates how far the signal estimated by the SIC receiver 228 is apart from 0 and 1. ***CSI****$_j$* provides, in effect, an appropriate weight according to channel information corresponding to a given antenna index. As described above, the SCI receiver 228 estimates a signal transmitted from another transmit antenna on the assumption that there is no error in a signal transmitted from the first transmit antenna. Thus, CSI; is set forth in Equation (14):

$$\mathrm{CSI}_j = \frac{SNR}{\left(\mathbf{H}\ (j)^{*}\mathbf{H}\ (j)+\frac{1}{SNR}\mathbf{I}_{N_T}\right)^{-1}} - 1 \quad .....(14)$$

However, the above ***CSI**$_j$* is not accurate because no regard is paid to the possibility of errors being generated in the signal transmitted from the first transmit antenna. That is, since the receiver does not consider errors that may be generated on the radio channel in estimating the transmitted signal, accurate channel estimation is impossible. Thus, a method of overcoming the problem is needed.

The object of the present invention is to substantially solve at least the above problems and/or disadvantages and to provide at least the advantages below. Accordingly, an object of the present invention is to provide, in a system using information detected in a previous stage, and that detects information in a current stage, an apparatus and method for reducing the effect of errors in the previous detected information on the detection of the information in the current stage.

This object is solved by the subject matter of the independent claims.

Preferred embodiments are defined in the dependent claims.

An aspect of the present invention is to provide an apparatus and method for detecting information in a current stage by reflecting errors in information detected in a previous stage, if the previous detected information has errors.

The above object and aspects are achieved by providing a receiving apparatus and method for receiving signals through a plurality of receive antennas in a mobile communication system.

According to one aspect of the present invention, in a receiving apparatus having a decoder for decoding a coded bit stream to information bits, for receiving signals through a plurality of receive antennas in a mobile communication system, a plurality of FFTs transform frequency-domain symbol sequences received at the receive antennas on subcarriers via a radio channel to time-domain FFT symbol sequences. An SIC receiver decides the value of a higher-priority transmitted symbol sequence using an FFT symbol sequence corresponding to the higher-priority transmitted symbol sequence and decides the value of a lower-priority transmitted symbol sequence using the decided higher-priority transmitted symbol sequence and error in the decided higher-priority transmitted symbol sequence. A plurality of demodulators demodulate the decided transmitted symbol sequences to a plurality of coded bit streams. A plurality of deinterleavers deinterleave the coded bit streams, stream by stream. A parallel-to-serial converter converts the deinterleaved coded bit streams to one coded bit stream.

According to another aspect of the present invention, in a method of receiving signals through a plurality of receive antennas in a mobile communication system having a decoder for decoding a coded bit stream to information bits, frequency-domain symbol sequences received at the receive antennas on subcarriers via a radio channel are fast-Fourier-transformed to time-domain FFT symbol sequences. The value of a higher-priority transmitted symbol sequence is decided using an FFT symbol sequence corresponding to the higher-priority transmitted symbol sequence and the value of a lower-priority transmitted symbol sequence is decided using the decided higher-priority transmitted symbol sequence and error in the decided higher-priority transmitted symbol sequence. The decided transmitted symbol sequences are demodulated to a plurality of coded bit streams and deinterleaved, stream by stream. The deinterleaved coded bit streams are converted to one coded bit stream.

The above features and advantages of the present invention will become more apparent from the following detailed description when taken in conjunction with the accompanying drawings in which:

FIG. 1 is a block diagram of a typical OFDM mobile communication system;
FIG. 2 is a block diagram of a typical multiple antenna OFDM mobile communication system;
FIG. 3 is a block diagram of an SIC receiver illustrated in FIG. 2
FIG. 4 is a graph comparing the effects of the present invention with a conventional method; and
FIG. 5 is another graph comparing the effects of the present invention with the conventional method.

A preferred embodiment of the present invention will be described herein below with reference to the accompanying drawings. In the following description, well-known functions or constructions are not described in detail since they would obscure the invention in unnecessary detail.

Referring first to FIG. 3, the present invention will be described. According to the present invention, the LLR of a $k^{th}$ bit from a $j^{th}$ transmit antenna is computed according to Equation (15):

$$v_j^k = \mathrm{CSI}_{\mathrm{MMSE},j} \cdot \left[ \min_{x \in \chi_0^k} | \tilde{x}_j - x |^2 - \min_{x \in \chi_1^k} | \tilde{x}_j - x |^2 \right] = \mathrm{CSI}_{\mathrm{MMSE},j} \; D(\tilde{x}_j, k) \quad \ldots\ldots (15)$$

where ***CSI**$_{MMSE}$ (j)* is determined according to Equation (16):

$$\mathrm{CSI}_{\mathrm{MMSE,j}} = \frac{SNR}{\left(H * H + \frac{1}{SNR} I_{N_\tau}\right)^{-1}} - 1 \qquad (16)$$

While an equalized received signal $D(\tilde{x}_j, k)$ calculated in the SIC receiver 228 is still used as stated before, a signal-to-noise ratio (SNR), $\mathrm{CSI}_{\mathrm{MMSE,j}}$ measured by the first MMSE receiver 300 is used as a weight. SNR can be used for obtaining weight. Thus, signals transmitted from the transmit antennas are weighted depending on how many errors are generated on the radio channel. Compared to the conventional method based on the presupposition that the signal transmitted from the first transmit antenna is received without errors on the radio channel, the present invention adjusts weights according to errors on the radio channel.

In the context of a mobile communication system having two transmit antennas and two receive antennas, the present invention will be described. Signals received at the two receive antennas are represented as Equation (1).

It is assumed that the average energy of signals transmitted from the transmit antennas is 1, that is, the average energy of $x_1$ and $x_2$ is 1. As described above, $x_1$ is estimated and decided by considering $x_2$ and n as noise. Here, n is a symbol index. $x_1$ is estimated according to Equation (17):

$$\tilde{x}_1 = c_1 (H^* H + \frac{1}{SNR} I_2)^{-1} h_1 y \quad \ldots\ldots (17)$$

where SNR represents signal-to-noise ratio and $c_1$ is a scaling factor to remove the bias of the estimate. $x_1$ is decided by according to Equation (18):

$$\hat{x}_1 = dec[\tilde{x}_1] \quad \ldots\ldots (18)$$

where $[x_1]$ represents an operation of deciding the value of $x_1$ using the estimate and decrepresents Abbreviation of decimal. From Equation (17) and Equation (18), Equation (19) is derived:

$$CSI_1 = \frac{SNR}{\left((H^*H + \frac{1}{SNR} I_2\right) - 1} - 1 \qquad (19)$$

Soft information of q bits mapped to $x_1$ is expressed as Equation (20):

$$v_1^k = CSI_1 \cdot D(\tilde{x}_1, k) \quad (k = 1, \ldots, q) \quad \ldots\ldots (20)$$

Equation (20) represents soft information of the first transmit antenna. An operation for computing soft information of the second transmit antenna based on the soft information of the first transmit antenna will be described below. For the signal transmitted from the second transmit antenna, $x_1$ is used. $x_1$ was decided on the assumption that it has no errors on the radio channel. The following two Equations (21) and (22) express the estimated and decision values of $x_2$ based on the assumption that the signal transmitted from the first transmit antenna has no errors.

$$\tilde{x}_{2,noerror} = \frac{h_2^*(y - h_1\hat{x}_1)}{|h_2|^2} \quad \text{..... (21)}$$

$$\hat{x}_{2,noerror} = dec[\tilde{x}_2] \quad \text{..... (22)}$$

The resulting CSI of $x_2$ is expressed as Equation (23):

$$CSI_{2,noerror} = |h_2|^2 \, SNR \quad (23)$$

Therefore, the soft information of the q bits mapped to $x_2$ is expressed as Equation (24):

$$v_{2,noerror}^k = CSI_{2,noerror} \cdot D(\tilde{x}_{2,noerror}, k) \quad (k = 1, \ldots, q) \quad \text{..... (24)}$$

Because $x_1$ often has errors on the radio channel, the estimation and decision on $x_2$ based on the assumption of error-free $x_1$ may result in a different value from actual transmitted information. Thus, estimation of the signal transmitted from the second transmit antenna, taking errors on the radio channel into account is required. The error of $x_1$ on the radio channel is defined as Equation (25):

$$e_1 = x_1 - \hat{x}_1 \quad (25)$$

In order to calculate the signal transmitted from the second transmit antenna, the received signal y is estimated considering the error of $x_1$, according to Equation (26):

$$\tilde{y} = h_2 x_2 + h_1 e_1 + n \quad \text{..... (26)}$$

Accordingly, the estimate, decision value, and CSI of $x_2$ are computed considering the error of $x_1$, according to Equations (27) through (29):

$$\tilde{x}_{2,error} = c_2 \left( \mathbf{H}^* \mathbf{H} + \begin{bmatrix} \frac{1}{DENR} & 0 \\ 0 & \frac{1}{SNR} \end{bmatrix} \right)^{-1} \mathbf{h}_2^* \mathbf{y} \quad \text{..... (27)}$$

$$\hat{x}_{2,error} = dec[\tilde{x}_2] \quad \text{..... (28)}$$

$$\mathrm{CSI}_{2,\mathrm{error}} = \frac{SNR}{\left(\mathbf{H}^{*}\mathbf{H} + \begin{bmatrix} \frac{1}{DENR} & 0 \\ 0 & \frac{1}{SNR} \end{bmatrix}\right)^{-1}_{22}} - 1 \quad \text{.....(29)}$$

where DENR represents decision error-to-noise ratio. It is noted from the above equations that in the presence of a decision error in $x_1$, the estimate and CSI of $x_2$ are changed.

FIGs. 4 and 5 illustrate the effects of the present invention. Specifically, FIG. 4 illustrates the effects of the present invention in the case where QPSK modulation symbols transmitted through two transmit antennas are received through two receive antennas and FIG. 5 illustrates the effects of the present invention in the case where 16QAM modulation symbols transmitted through two transmit antennas are received through two receive antennas. The graphs illustrated in FIGs. 4 and 5 demonstrate that the present invention offers far better performance than the conventional method.

In accordance with the present invention as described above, a signal transmitted from another transmit antenna is estimated based on decision errors in a signal transmitted from the first transmit antenna. Therefore, deterioration of error correction performance caused by fading in the air can be overcome.

While the invention has been shown and described with reference to a certain preferred embodiment thereof, it will be understood by those skilled in the art that various changes in form and details may be made therein without departing from the scope of the invention as defined by the appended claims.

## Claims

1. A receiving apparatus having a decoder for decoding a coded bit stream to information bits, for receiving signals through a plurality of receive antennas in a mobile communication system, comprising:

    a plurality of FFT transformers for transforming frequency-domain symbol sequences received at the receive antennas on subcarriers via a radio channel to time-domain FFT symbol sequences;
    a successive interference cancellation receiver for deciding the value of a higher-priority transmitted symbol sequence using an FFT symbol sequence corresponding to the higher-priority transmitted symbol sequence and deciding the value of a lower-priority transmitted symbol sequence using the decided higher-priority transmitted symbol sequence and error in the decided higher-priority transmitted symbol sequence;
    a plurality of demodulators for demodulating the decided transmitted symbol sequences to a plurality of coded bit streams;
    a plurality of deinterleavers for deinterleaving the coded bit streams, stream by stream; and
    a parallel-to-serial converter for converting the deinterleaved coded bit streams to one coded bit stream.

2. The receiving apparatus of claim 1, wherein the successive interference cancellation receiver estimates the transmitted symbol sequences using the FFT symbol sequences and decides the values of the transmitted symbol sequences using the estimated symbol sequences.

3. The receiving apparatus of claim 2, wherein the error of an estimated symbol sequence is the difference between the estimated and decided value of the higher-priority transmitted symbol sequence.

4. The receiving apparatus of claim 3, wherein the successive interference cancellation receiver prioritizes the transmitted symbol sequences according to information included in the transmitted symbol sequences.

5. A method of receiving signals through a plurality of receive antennas in a mobile communication system apparatus having a decoder for decoding a coded bit stream to information bits, comprising the steps of:

    (1) fast-Fourier-transforming frequency-domain symbol sequences received at the receive antennas on subcarriers via a radio channel to time-domain FFT symbol sequences;
    (2) deciding the value of a higher-priority transmitted symbol sequence using an FFT symbol sequence corresponding to the higher-priority transmitted symbol sequence and deciding the value of a lower-priority transmitted symbol sequence using the decided higher-priority transmitted symbol sequence and error in the decided higher-priority transmitted symbol sequence;
(3) demodulating the decided transmitted symbol sequences to a plurality of coded bit streams;
(4) deinterleaving the coded bit streams, stream by stream; and
(5) converting the deinterleaved coded bit streams to one coded bit stream.

**6.** The method of claim 5, wherein step (2) comprises the step of estimating the transmitted symbol sequences using the FFT symbol sequences and deciding the values of the transmitted symbol sequences using the estimated symbol sequences.

**7.** The method of claim 6, wherein the error of an estimated symbol sequence is the difference between an estimated and a decision value of the higher-priority transmitted symbol sequence.

**8.** The method of claim 7, wherein step (2) comprises the step of prioritizing the transmitted symbol sequences according to information included in the transmitted symbol sequences.

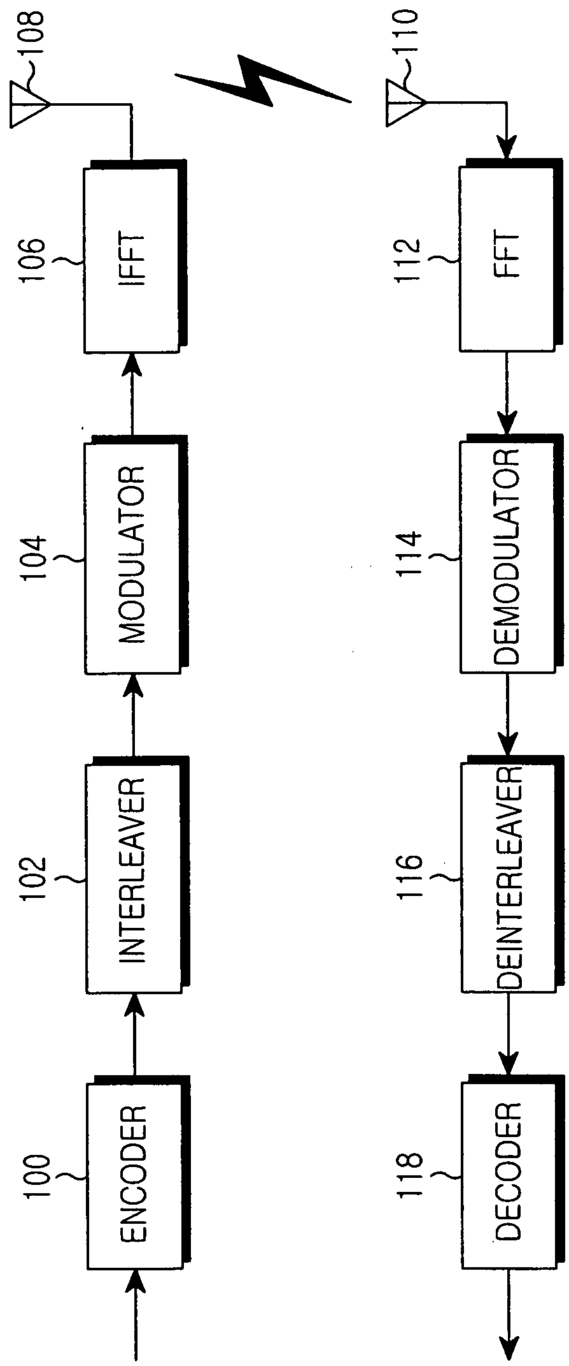
100
ENCODER
102
INTERLEAVER
104
MODULATOR
106
IFFT
108
110
112
FFT
114
DEMODULATOR
116
DEINTERLEAVER
118
DECODER

FIG.1

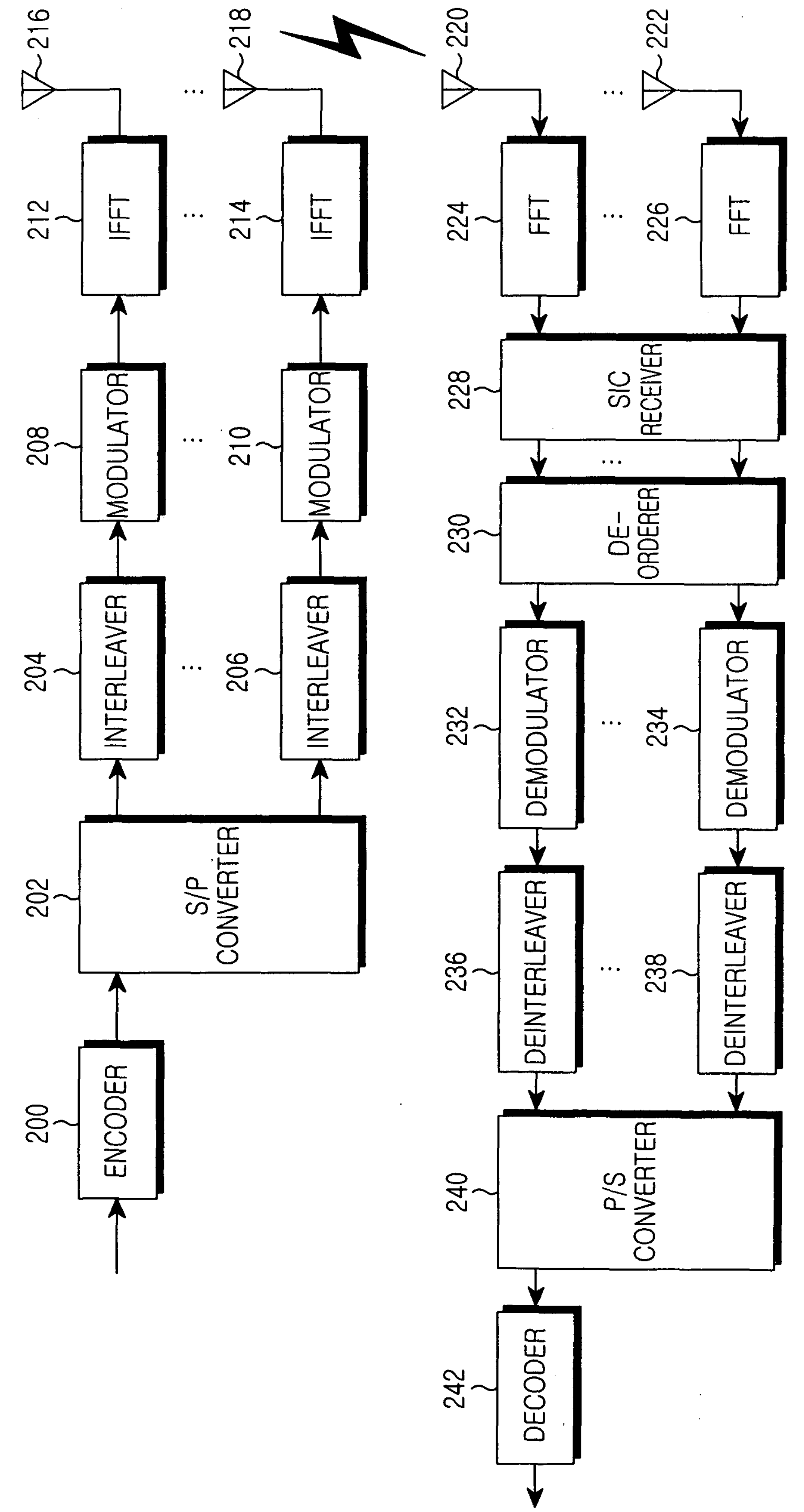

200
ENCODER
202
S/P CONVERTER
204
INTERLEAVER
206
INTERLEAVER
208
MODULATOR
210
MODULATOR
212
IFFT
214
IFFT
216
218
220
222
224
FFT
226
FFT
228
SIC RECEIVER
230
DE-ORDERER
232
DEMODULATOR
234
DEMODULATOR
236
DEINTERLEAVER
238
DEINTERLEAVER
240
P/S CONVERTER
242
DECODER


FIG.2

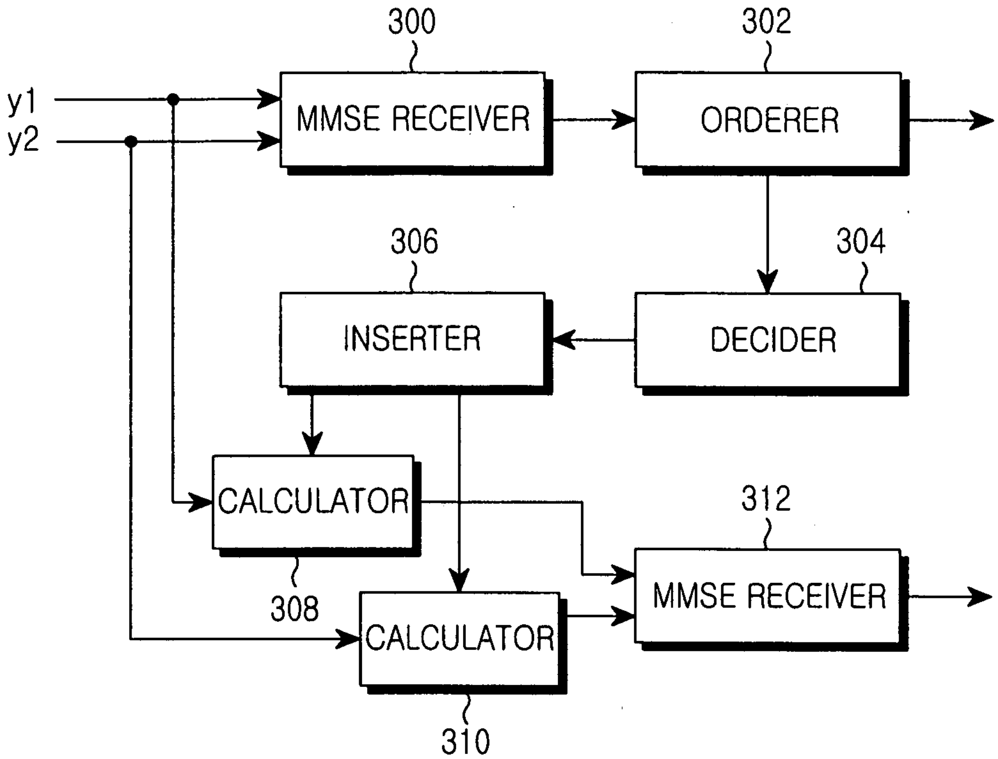
300
302
y1
y2
MMSE RECEIVER
ORDERER
306
304
INSERTER
DECIDER
CALCULATOR
312
308
MMSE RECEIVER
CALCULATOR
310

FIG.3

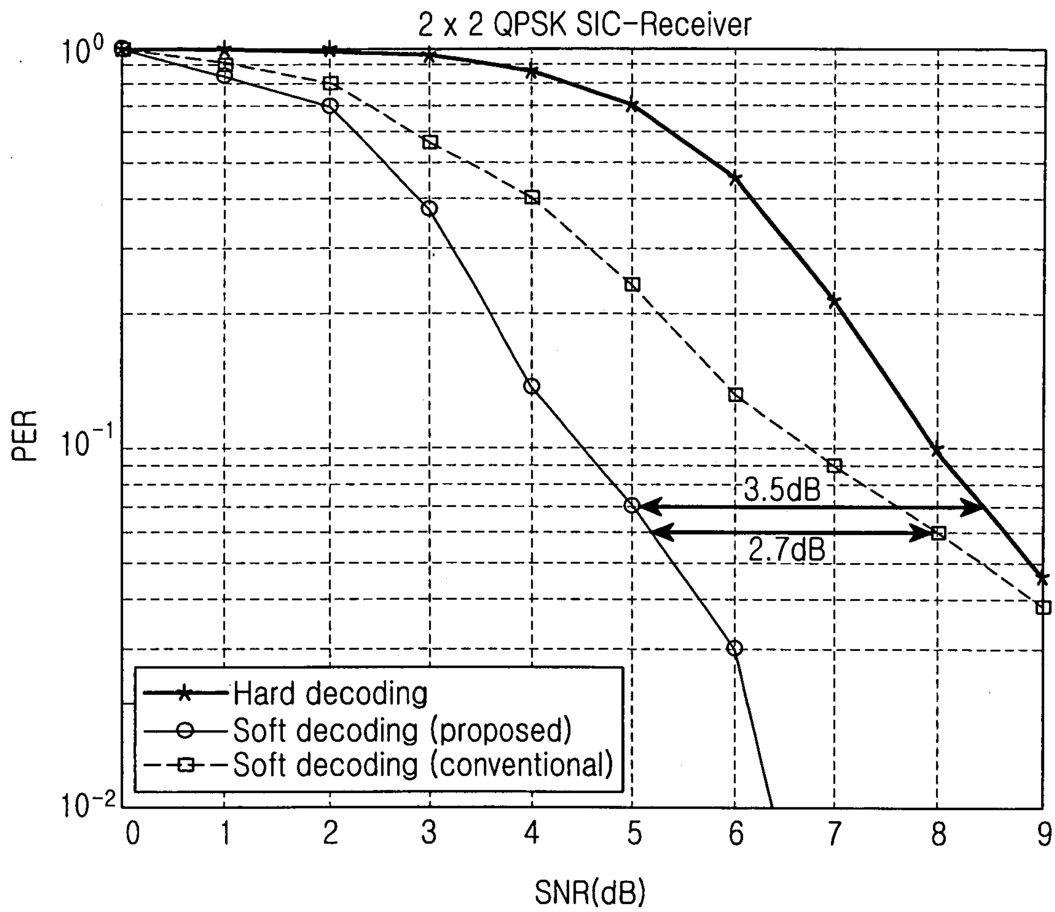
2 x 2 QPSK SIC-Receiver
$10^0$
$10^{-1}$
$10^{-2}$
PER
0
1
2
3
4
5
6
7
8
9
SNR(dB)
3.5dB
2.7dB
Hard decoding
Soft decoding (proposed)
Soft decoding (conventional)

FIG.4

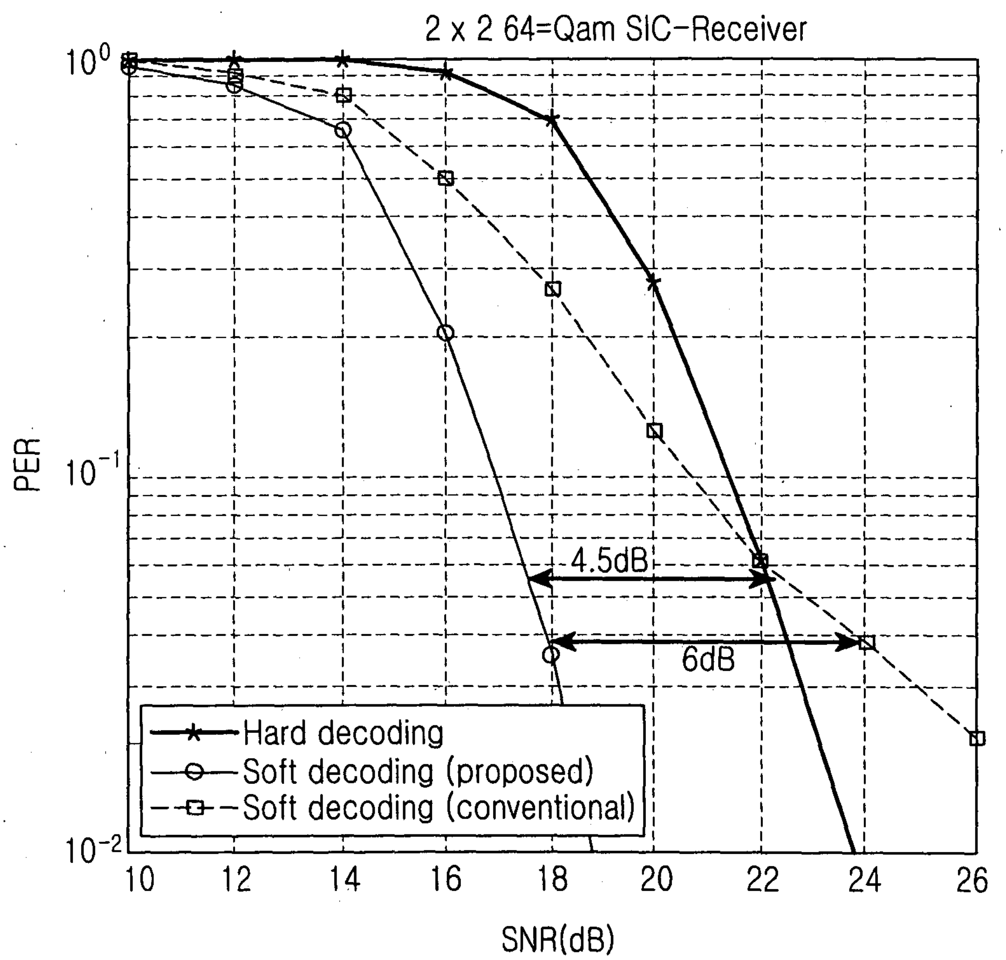
2 x 2 64=Qam SIC-Receiver
PER
SNR(dB)
$10^0$
$10^{-1}$
$10^{-2}$
10
12
14
16
18
20
22
24
26
4.5dB
6dB
Hard decoding
Soft decoding (proposed)
Soft decoding (conventional)

FIG.5